# EUROPÄISCHE PATENTSCHRIFT

(11) **EP 0 845 631 B1**
(45) Veröffentlichungstag und Bekanntmachung des Hinweises auf die Patenterteilung: **30.10.2002**
(21) Anmeldenummer: 97120662.8
(22) Anmeldetag: 26.11.1997
(51) Int. Cl.: F16N 11/08

(54) **Schmierstoffspender**
Lubricant dispenser
Distributeur de graisse

(30) Priorität: 27.11.1996 DE 19649050; 03.09.1997 DE 29715808 U
(43) Veröffentlichungstag der Anmeldung: 03.06.1998
(73) Patentinhaber: perma-tec GmbH & Co. KG, 97717 Euerdorf (DE)
(72) Erfinder: May, Anton, Dipl.-Ing., 97705 Burkardroth (DE); Helbig, Claus, Dipl.-Ing., 97453 Schonungen (DE); Scheit, Bernd, Dipl.-Ing., 97708 Aschach (DE); Brand, Stefan, 97688 Bad Kissingen (DE)
(74) Vertreter: Albrecht, Rainer Harald, Dr.-Ing.

(56) Entgegenhaltungen:
- EP-A- 0 577 077
- EP-A- 0 704 654
- DE-U- 9 214 096
- DE-U- 9 309 575
- US-A- 5 460 242

## Beschreibung

Die Erfindung betrifft einen Schmierstoffspender mit
einem zylindrischen Gehäuse, das aus einem Gehäuseunterteil und einem aufschraubbaren Gehäuseoberteil besteht,
einem elektromotorischen Antrieb mit Elektromotor, Untersetzungsgetriebe und Gewindespindel,
einem Stellkolben,
einer Schaltplatine im Gehäuseoberteil mit Steuereinrichtung für den elektromotorischen Antrieb sowie
Batterien,
wobei das Gehäuseunterteil eine Aufnahmekammer für einen Schmierstoffvorrat sowie ein unterseitiges Maschinenanschlußteil mit Schmierstoffabgabekanal aufweist und wobei der Stellkolben in die Aufnahmekammer eingepaßt ist, an eine auf der Gewindespindel geführte Spindelmutter angeschlossen ist sowie durch eine Drehbewegung der Gewindespindel in Ausstoßrichtung bewegbar ist.

Bei dem aus DE-U 92 14 096 bekannten Schmierstoffspender, von dem die Erfindung ausgeht, ist das Gehäuseoberteil des Schmierstoffspenders zugleich als Getriebegehäuse ausgebildet, in dem die Zahnräder des Untersetzungsgetriebes sowie außerdem die Gewindespindel drehbar gelagert sind. Außerdem nimmt das als Getriebegehäuse ausgebildete Gehäuseoberteil des Schmierstoffspenders die Schaltplatine auf und enthält eine Kammer für die Aufnahme der Batterien. Der Elektromotor ist unterseitig an einen Boden des Gehäuseoberteils angeflanscht. Das als Getriebegehäuse ausgebildete Gehäuseoberteil besteht aus zwei Gehäusehälften, die miteinander verschweißt sind. Ein abschraubbares Deckelglas im Bereich der Schaltplatine sowie ein Klappdeckel für das Batteriefach sind erforderlich, damit an der Schaltplatine die Einstellungen vorgenommen und Batterien ausgewechselt werden können. Die Anordnung ist fertigungstechnisch sehr aufwendig. Der Erfindung liegt die Aufgabe zugrunde, den Aufbau des Schmierstoffspenders zu vereinfachen, wobei die Schaltplatine sowie die Batterien leicht zugänglich sein sollen.

Zur Lösung dieser Aufgabe lehrt die Erfindung,
daß der elektromotorische Antrieb ein im wesentlichen zylindrisches Antriebsgehäuse aufweist, welches den Elektromotor und das Untersetzungsgetriebe enthält,
daß im Gehäuse ein austauschbarer Einsatz angeordnet ist, der einen zylindrischen Mantel sowie eine bodenseitige Montageplatte für das Antriebsgehäuse des elektromotorischen Antriebs aufweist und einen Aufnahmeraum zum Einsetzen der Batterien enthält, wobei das Antriebsgehäuse an der Montageplatte exzentrisch so befestigt ist, daß die exzentrisch an der Gestirnseite des Antriebsgehäuses angeordnete Gewindespindel mittig in die Aufnahmekammer des Gehäuseunterteils hineinragt und der Aufnahmeraum für die Batterien seitlich an das Antriebsgehäuse angrenzt, und
daß der Einsatz in das Gehäuseunterteil eingesetzt ist und einen zwischen dem Gehäuseunterteil und Gehäuseoberteil einspannbaren Außenbund aufweist.

Bei der Zerlegung des erfindungsgemäßen Schmierstoffbehälters, z. B. zum Zwecke einer neuen Schmierstoffüllung und/oder eines Batterieaustausches, zerfällt dieser im wesentlichen in drei Teile, nämlich das Gehäuseoberteil, den Einsatz mit daran befestigtem elektromotorischen Antrieb und Batteriefach sowie das Gehäuseunterteil. Das Gehäuseoberteil erfüllt die Funktion eines Deckels. Das Gehäuseunterteil nimmt den Schmierstoffvorrat auf. Der Einsatz mit angeschlossenen Bauteilen stellt das Antriebsaggregat dar. Durch Verschraubung des Gehäuseoberteils mit dem Gehäuseunterteil ist der Einsatz einspannbar und lagefixiert. Mit wenigen Handgriffen ist der zerlegte Schmierstoffspender wieder zusammensetzbar.

Im einzelnen bestehen im Rahmen der Erfindung mehrere Möglichkeiten der weiteren Ausbildung und Gestaltung. So ist nach bevorzugter Ausführung der Erfindung am Gehäuseoberteil ein nach außen geführter Schalter angeordnet, der an die Schaltplatine angeschlossenen ist und ein Ein- und Ausschalten des Schmierstoffspenders ermöglicht. In weiterer Ausgestaltung lehrt die Erfindung, daß die Schaltplatine horizontal oberhalb des rückwärtigen Endes des Getriebemotors angeordnet ist und daß in die Stirnfläche des Gehäuseoberteils ein Druckelement eingesetzt ist, durch dessen Stellbewegung der an der Oberseite der Schaltplatine angeordnete Schalter betätigbar ist. Das Druckelement kann als Drehknopf ausgebildet sein, der bei Betätigung an einer am Gehäuseoberteil angeformten Keilfläche entlanggleitet und zusätzlich zur Drehbewegung auch eine Axialbewegung ausführt.

Die Schaltplatine trägt die elektrische Steuerschaltung, ggf. mit Mikroprozessor, sowie die Steuereinrichtung für den elektromotorischen Antrieb. An die elektrische Steuereinrichtung können Schalt- oder Sensorelemente angeschlossen sein, mit denen die Bewegung und/oder die Stellung der Gewindespindel in dem zylindrischen Antriebsgehäuse mittelbar oder unmittelbar abgefragt wird. Gemäß einer bevorzugten Anordnung ist das Antriebsgehäuse des elektromotorischen Antriebs unter Zwischenschaltung von Distanzelementen auf der Montageplatte befestigt und sind an der Oberseite der Montageplatte Sensorelemente im Bereich der Abtriebswelle bzw. Gewindespindel angeordnet, mit denen die Bewegung und/oder die Stellung der Gewindespindel mittelbar oder unmittelbar abfragbar sind. Eine andere Ausführung sieht vor, daß auf der Schaltplatine ein Sensorelement angeordnet ist, welches einem an der Rückseite des elektromotorischem Antriebs herausgeführten Wellenstumpf zugeordnet ist und die Stellung der Gewindespindel mittelbar durch Messung der Umdrehungszahl des Wellenstumpfes erfaßt.

Der erfindungsgemäße Schmierstoffspender ist so eingerichtet, daß auf einfache Weise ein Austausch der Batterien sowie außerdem auch ein Austausch der Bauteile für den Schmierstoffvorrat möglich ist, wenn dieser verbraucht sein sollte oder aus anderen Gründen auszuwechseln ist. Gehäuseoberteil und Gehäuseunterteil sind lösbar miteinander verschraubt. Zum Zwecke des Austausches und der Erneuerung der Batterien bzw. des Schmierstoffvorrates wird das Gehäuseoberteil abgeschraubt. Die Anordnung kann so getroffen sein, daß die Gewindespindel mit der Gewindemutter an dem Gehäuseoberteil verbleibt. Durch reversierenden Antrieb des Motors, zweckmäßig bevor die Schraubverbindung zwischen Gehäuseoberteil und Gehäuseunterteil gelöst wird, kann der Stellkolben in eine obere Ausgangsposition zurückbewegt werden.

Eine andere Ausführung der Erfindung sieht vor, daß die Gewindespindel durch eine Steckkupplung mit einer an der Unterseite der Montageplatte vorstehenden Abtriebswelle des elektromotorischen Antriebs verbunden ist und daß das Gehäuseunterteil mit dem in die Aufnahmekammer eingebrachten Schmierstoffvorrat, dem Stellkolben und der Gewindespindel eine montagefertige und als Einheit wechselbare Baugruppe bildet. Die Füllung der Aufnahmekammer mit dem Schmierstoffvorrat und die Positionierung der aus Stellkolben und Gewindespindel bestehenden Anordnung innerhalb der Aufnahmekammer des Gehäuseunterteils erfolgt bei dieser Ausführung der Erfindung fabrikmäßig und entzieht sich dem Einfluß des Anwenders. Der Anwender verbindet lediglich die Abtriebswelle und die Gewindespindel mittels der Steckkupplung und fügt die Gehäuseteile zusammen. Die aus dem Gehäuseunterteil, dem Stellkolben und der Gewindespindel bestehende Baugruppe ist ein Wegwerfteil. Es versteht sich, daß das zumeist aus Kunststoff bestehende Gehäuseunterteil, der ebenfalls aus Kunststoff bestehende Stellkolben und die zumeist metallische Gewindespindel auch getrennt entsorgt werden können.

Die Gewindespindel ist an ihrem kupplungsabgewandten Ende zweckmäßig gewindefrei mit einem dem Gewindeaußendurchmesser entsprechenden Durchmesser ausgeführt. Dies führt zu einer Zerstörung des Gewindegangs der Spindelmutter, wenn der Stellkolben nach Abgabe des Schmierstoffvorrates auf das gewindefrei Ende der Gewindespindel aufläuft, und verhindert eine nicht bestimmungsgemäße Wiederverwendung der aus Gehäuseunterteil, Gewindespindel und Stellkolben bestehenden Baugruppe. Außerdem wird dadurch verhindert, daß der Stellkolben nach Abgabe des Schmierstoffvorrates an das Gehäuseunterteil anschlägt und Spannkräfte auf die Schraubverbindung zwischen Gehäuseunterteil und Gehäuseoberteil ausübt.

Beim Austausch des Schmierstoffes baut sich in der Aufnahmekammer ein Druck auf. Über die Kolbenfläche des Stellkolbens wirkt eine Axialkraft auf die Gewindespindel in Richtung der Abtriebswelle bzw. Steckkupplung. Aufgrund dieser Axialkraft ist ausgeschlossen, daß die Gewindespindel sich von der Steckkupplung löst. Um die Axialkraft von dem elektromotorischen Antrieb fernzuhalten, ist die Steckkupplung zweckmäßig an einem an der Unterseite der Montageplatte angeordneten Gleitring abgestützt, der die Axialkräfte aufnimmt und diese in die Montageplatte und damit in das Gehäuse des Schmierstoffspenders einleitet.

Die Gewindespindel kann an ihrem rückwärtigen Ende einen Mehrkantkopf aufweisen, der formschlüssig in die Steckkupplung eingreift und einen Anschlag für die auf der Gewindespindel geführte Spindelmutter des Stellkolbens bildet.

In weiterer Ausgestaltung lehrt die Erfindung, daß in die Spindelmutter des Stellkolbens ein Elastomerring eingelegt ist, der das Radialspiel zwischen Gewindespindel und Spindelmutter überbrückt und den motorseitigen Raum gegegenüber dem Schmierstoffvorratsraum abdichtet. Ferner weist der Stellkolben zweckmäßig mindestens eine randseitige Elastomerdichtung auf, welche durch ihre Reibung am Gehäuseunterteil den Stellkolben drehfest in der Aufnahmekammer hält.

Gemäß einer bevorzugten Ausführung der Erfindung weist die Schaltplatine einen Speicherbaustein auf, in dem Angaben über die Stellung der Gewindespindel bzw. des Stellkolbens abgespeichert werden. Ferner weist der Einsatz eine Schalteinrichtung auf, die beim Anschluß eines mit Schmierstoffvorrat gefüllten Gehäuseunterteils mit dem Stellkolben wechselwirkt und eine Reset-Funktion des Speicherbausteins auslöst. Durch die Reset-Funktion wird die zuletzt gespeicherte Angabe über die Stellung der Gewindespindel bzw. des Stellkolbens wieder gelöscht.

Im folgenden wird die Erfindung anhand einer lediglich ein Ausführungsbeispiel darstellenden Zeichnung ausführlicher erläutert. Es zeigen in schematischer Darstellung
- Fig. 1: einen Längsschnitt durch einen erfindungsgemäßen Schmierstoffspender,
- Fig. 2: einen Schnitt in Richtung A-A durch den Gegenstand nach Fig. 1 und
- Fig. 3 und 4: einen Längsschnitt durch weitere Ausführungen des erfindungsgemäßen Schmierstoffspenders.

Der in den Figuren dargestellte Schmierstoffspender ist für die Abgabe eines Schmierstoffes an eine Maschine bestimmt. Der Schmierstoffspender weist ein zylindrisches Gehäuse 1 auf, das aus einem Gehäuseunterteil 2 und einem aufschraubbaren Gehäuseoberteil 3 besteht. Das Gehäuseunterteil 2 enthält eine Aufnahmekammer 4 für einen Schmierstoffvorrat und weist unterseitig ein Maschinenanschlußteil mit Schmierstoffabgabekanal 5 auf. Zum grundsätzlichen Aufbau des Schmierstoffspenders gehören ferner ein elektromotorischer Antrieb 6 mit Elektromotor, Untersetzungsgetriebe und Gewindespindel 7, ein in die Aufnahmekammer 4 eingepaßter Stellkolben 8, dessen Bewegung, die zeitliche Schmierstoffrate bestimmend, steuerbar ist, eine Schaltplatine 9 mit Steuereinrichtung für den elektromotorischen Antrieb 6 sowie Batterien 10. Auf der Gewindespindel 7 ist eine Spindelmutter 11 angeordnet, an die der Stellkolben 8 angeschlossen ist.

Der elektromotorische Antrieb 6 besteht aus einem Elektromotor und einem Untersetzungsgetriebe und weist ein im wesentlichen zylindrisches Antriebsgehäuse 12 auf. Eine mit der Gewindespindel 7 verbundene Abtriebswelle 13 ist exzentrisch aus dem Antriebsgehäuse 12 herausgeführt. Der elektromotorische Antrieb 6 ist exzentrisch so angeordnet, daß die Gewindespindel 7 zentrisch in die Aufnahmekammer 4 hineinragt. Das Gehäuseoberteil 3 und das Gehäuseunterteil 2, in dem sich die Aufnahmekammer befindet, sind über eine Schraubverbindung 14 miteinander vereinigt.

Im Gehäuse 1 ist ein austauschbarer Einsatz 15 angeordnet, der einen zylindrischen Mantel 16 sowie eine bodenseitige Montageplatte 17 für das Antriebsgehäuse 12 des elektromotorischen Antriebs 6 aufweist und einen Aufnahmeraum zum Einsetzen der Batterien 10 enthält. Der Einsatz 15 ist in das Gehäuseunterteil 2 eingesetzt und weist einen zwischen dem Gehäuseunterteil 2 und dem Gehäuseoberteil 3 einspannbaren Außenbund 18 auf.

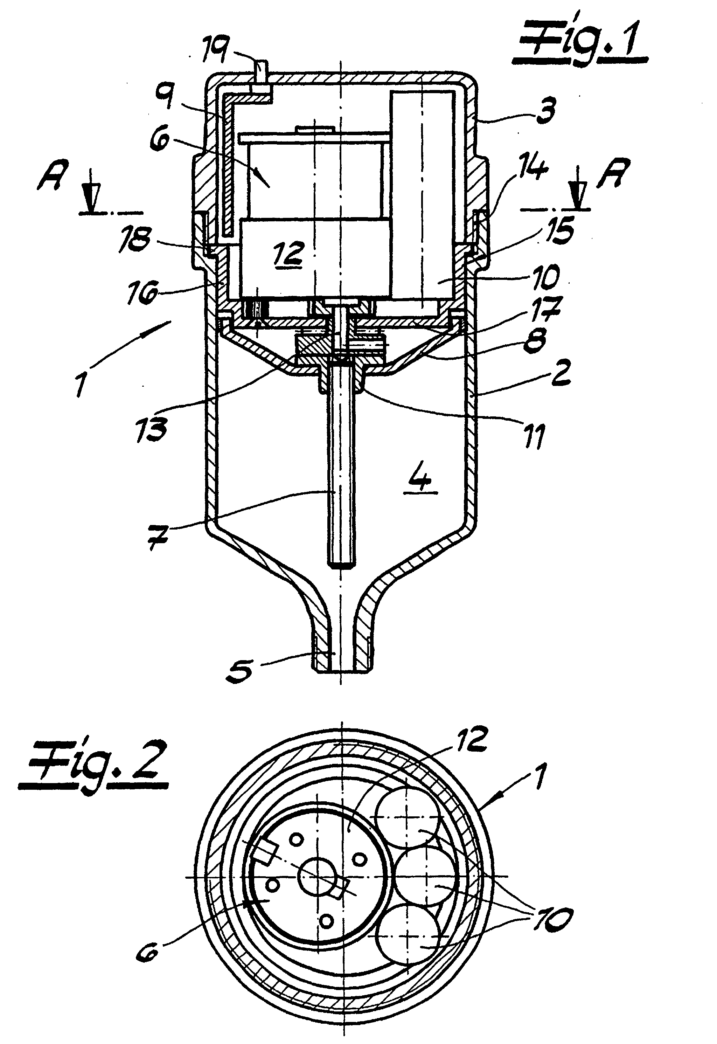

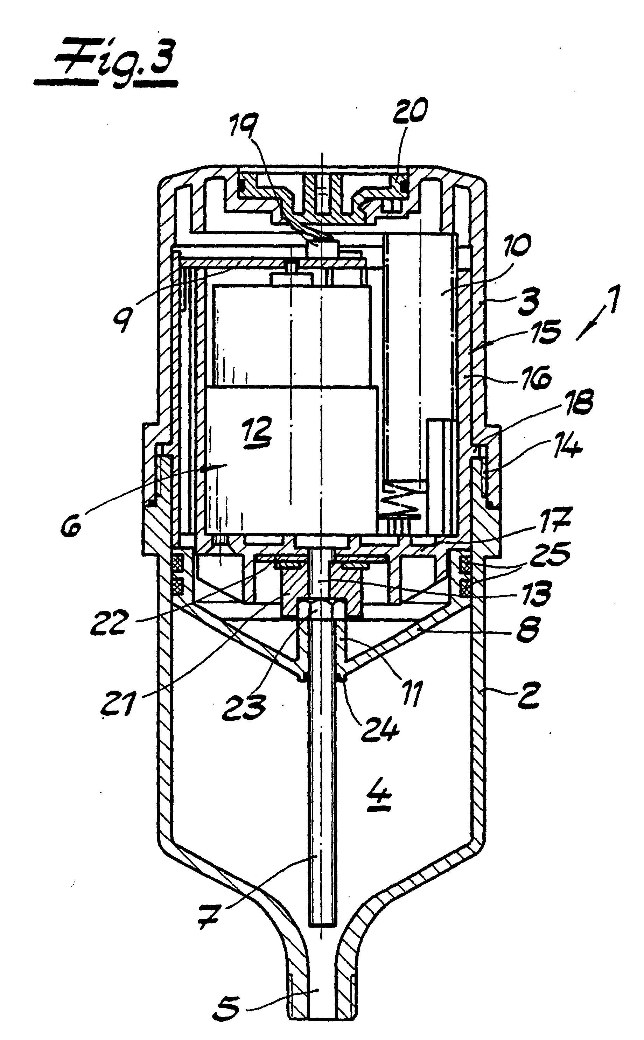

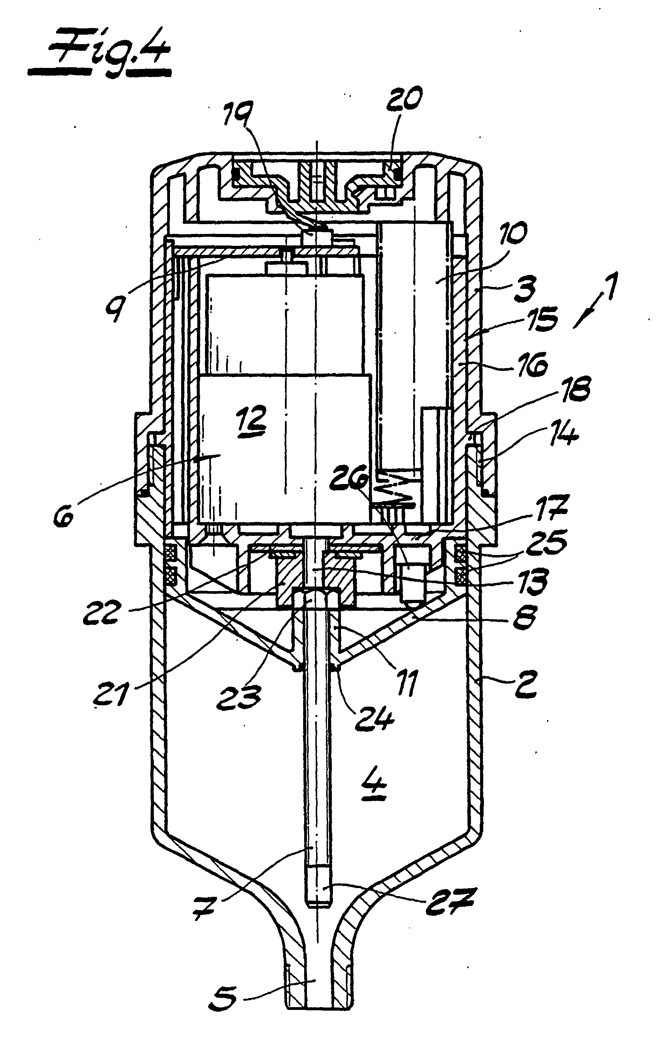

Die Schaltplatine 9 befindet sich im Gehäuseoberteil 3 und trägt die elektrische Steuerschaltung, ggf. mit Mikroprozessor, sowie die Steuereinrichtung für den elektromotorischen Antrieb 6. Die Schaltplatine 9 trägt einen nach außen geführten Schalter 19 für die Steuereinrichtung, der ein Ein- und Ausschalten des Schmierstoffspenders ermöglicht (Fig. 1).

Die elektrische Steuereinrichtung kann (nicht dargestellte) Schalt- und Sensorelemente aufweisen, die beispielsweise an der Oberseite der Montageplatte (17) im Bereich der mit der Gewindespindel 7 fluchtend verbundenen Abtriebswelle 13 angeordnet sind, mit denen die Bewegung und/oder die Stellung der Gewindespindel 7 mittelbar oder unmittelbar abfragbar sind. Es könnte aber auch eine elektrische Steuereinrichtung vorgesehen sein, die eine Zeitsteuerung für die Bewegung der Gewindespindel aufweist. Dann sind Sensorelemente, die die Stellung der Gewindespindel mittelbar oder unmittelbar abfragen, nicht erforderlich.

Die Schraubverbindung 14 zwischen Gehäuseoberteil 3 und Gehäuseunterteil 2 ist lösbar. Das Gehäuseoberteil 3 kann zum Zwecke eines Batterieaustausches und/oder der Erneuerung des Schmierstoffvorrates abgezogen werden. Bei diesem Abziehen verbleiben die Gewindespindel 7 und die Spindelmutter 11 an dem Gehäuseoberteil 3. Es versteht sich, daß im Zusammenhang mit diesen Maßnahmen der Stellkolben 8 zweckmäßigerweise in seine Ausgangsstellung zurückbewegt wird, die in Fig. 1 gezeichnet ist. Dazu kann der elektromotorische Antrieb reversierbar ausgeführt werden. Der Einsatz 15 ist von dem Gehäuseunterteil 2 abnehmbar, wenn das Gehäuseoberteil 3 und das Gehäuseunterteil 2 wie beschrieben voneinander getrennt worden sind.

Bei der in Fig. 3 dargestellten Ausführung ist die Schaltplatine 9 horizontal oberhalb des rückwärtigen Endes des elektromotorischen Antriebs 6 angeordnet. In die Stirnfläche des Gehäuseoberteils 3 ist ein Druckelement 20 eingesetzt, durch dessen Stellbewegung der an der Oberseite der Schaltplatine 9 angeordnete Schalter 19 betätigbar ist. Das Druckelement 20 ist im Ausführungsbeispiel als Drehknopf ausgebildet, der bei Betätigung an einer am Gehäuseoberteil angeformten Keilfläche entlanggleitet und zusätzlich zur Drehbewegung auch eine Axialbewegung ausführt.

Der Fig. 3 entnimmt man ferner, daß die Abtriebswelle 13 des auf der Montageplatte befestigten Getriebemotors an der Unterseite der Montageplatte 17 vorsteht und mit der Gewindespindel 7 durch eine Steckkupplung 21 lösbar verbunden ist. Das Gehäuseunterteil 2 mit dem in die Aufnahmekammer 4 eingebrachten Schmierstoffvorrat, dem Stellkolben 8 und der Gewindespindel 7 bildet eine montagefertige und als Einheit wechselbare Baugruppe. Die Steckkupplung 21 ist an einem an der Unterseite der Montageplatte 17 angeordnetem Gleitring 22 abgestützt. Der Gleitring 22 nimmt Axialkräfte auf und leitet diese in die Montageplatte 17 ein. Die Gewindespindel 7 weist an ihrem rückwärtigen Ende einen Mehrkantkopf 23 auf, der formschlüssig in die Steckkupplung 21 eingreift und einen Anschlag für die auf der Gewindespindel 7 geführte Spindelmutter 11 des Stellkolbens bildet. In die Spindelmutter 11 des Stellkolbens ist ein Elastomerring 24 eingelegt, der das Radialspiel zwischen Gewindespindel 7 und Spindelmutter 11 überbrückt. Der Fig. 3 entnimmt man auch, daß der Stellkolben 8 randseitig Elastomerdichtungen 25 aufweist, welche durch ihre Reibung am Gehäuseunterteil 2 den Stellkolben 8 drehfest in der Aufnahmekammer 4 halten.

Bei der Ausführungsform gemäß Fig. 3 wird das Gehäuseunterteil 2 mit einer Schmierstoffüllung, mit Stellkolben 8 und Gewindespindel 7 als fabrikmäßig gefertigte Baugruppe angeliefert. Der Einsatz 15 mit Getriebemotor bildet ein weiteres, standardmäßig ausgebildetes und wiederverwendbares Bauteil. Der Anwender setzt den Einsatz 15 in das Gehäuseunterteil ein, wobei das Anschlußende der Gewindespindel 7 in die Steckkupplung 21 eingeführt wird.

Anschließend wird das Gehäuseoberteil 3 aufgeschraubt, wobei der Einsatz 15 zwischen Gehäuseoberteil 3 und Gehäuseunterteil 2 eingespannt und damit fixiert wird. Mittels des Drehknopfes 20 wird der Schmierstoffspender in Betrieb gesetzt. Die Steuereinrichtung weist einen Zeitgeber sowie einen nicht dargestellten berührungslos arbeitenden Sensor auf, wobei der Zeitgeber in vorgegebenen Zeitintervallen einen Startimpuls für den Getriebemotor gibt und wobei der Sensor unmittelbar oder mittelbar die Drehbewegung der Abtriebswelle überwacht und nach einer vorgegebenen Anzahl von Umdrehungen ein Stopsignal für den Getriebemotor abgibt. Zweckmäßig weist die Steuereinrichtung ferner einen Überlastschutz auf, welcher die Stromaufnahme des Getriebemotors mißt und die Stromzufuhr zum Getriebemotor unterbricht, wenn die Stromaufnahme einen Sollwert bzw. maximalen Vorgabewert überschreitet. Nach mehrmaligem Überschreiten der maximal zulässigen Stromaufnahme schaltet die Elektronik den Schmierstoffspender automatisch ab und gibt ein Störsignal.

Bei der in Fig. 4 dargestellten Ausführung, die eine weitere Ausgestaltung des zuvor beschriebenen Schmierstoffspenders entsprechend Fig. 3 betrifft, weist die Schaltplatine 9 einen Speicherbaustein auf, in dem Angaben über die Stellung der Gewindespindel 7 bzw. des Stellkolbens 8 abgespeichert werden. Der Einsatz 15 ist mit einer Schalteinrichtung 26, z. B. in Form eines Druckschalters, ausgerüstet, die beim Anschluß eines mit Schmierstoffvorrat gefüllten Gehäuseunterteils 2 mit dem Stellkolben 8, welcher sich in einer definierten Ausgangsposition befindet, wechselwirkt und eine Reset-Funktion des Speicherbausteins auslöst. Mit der Reset-Funktion wird die zuletzt gespeicherte Angabe über die Position der Gewindespindel 7 bzw. des Stellkolbens 8 gelöscht. Ferner entnimmt man der Fig. 4, daß die Gewindespindel an ihrem kupplungsabgewandten Ende 27 gewindefrei mit einem dem Gewindeaußendurchmesser entsprechenden Durchmesser ausgeführt ist. Dies führt zu einer Zerstörung des Gewindegangs der Spindelmutter 11, wenn der Stellkolben 8 nach Abgabe des Schmierstoffvorrates auf das gewindefreie Ende 27 der Gewindespindel 7 aufläuft, und verhindert eine nicht bestimmungsgemäße Wiederverwendung der aus Gehäuseunterteil 2, Gewindespindel 7 und Stellkolben 8 bestehenden Baugruppe. Außerdem wird dadurch verhindert, daß der Stellkolben 8 nach Abgabe des Schmierstoffvorrates an das Gehäuseunterteil 2 anschlägt und Spannkräfte auf die Schraubverbindung zwischen Gehäuseunterteil 2 und Gehäuseoberteil 3 ausübt.

## Patentansprüche

1. Schmierstoffspender mit
einem zylindrischen Gehäuse (1), das aus einem Gehäuseunterteil (2) und einem aufschraubbaren Gehäuseoberteil (3) besteht,
einem elektromotorischen Antrieb (6) mit Elektromotor, Untersetzungsgetriebe und Gewindespindel (7),
einem Stellkolben (8),
einer Schaltplatine (9) im Gehäuseoberteil (3) mit Steuereinrichtung für den elektromotorischen Antrieb (6) sowie
Batterien (10),
wobei das Gehäuseunterteil (2) eine Aufnahmekammer (4) für einen Schmierstoffvorrat sowie ein unterseitiges Maschinenanschlußteil mit Schmierstoffabgabekanal (5) aufweist und wobei der Stellkolben (8) in die Aufnahmekammer (4) eingepaßt ist, an eine auf der Gewindespindel (7) geführte Spindelmutter (11) angeschlossen ist sowie durch eine Drehbewegung der Gewindespindel (7) in Ausstoßrichtung bewegbar ist, **dadurch gekennzeichnet,**
**daß** der elektromotorische Antrieb (6) ein im wesentlichen zylindrisches Antriebsgehäuse (12) aufweist, welches den Elektromotor und das Untersetzungsgetriebe enthält,
**daß** im Gehäuse (1) ein austauschbarer Einsatz (15) angeordnet ist, der einen zylindrischen Mantel (16) sowie eine bodenseitige Montageplatte (17) für das Antriebsgehäuse (12) des elektromotorischen Antriebs (6) aufweist und einen Aufnahmeraum zum Einsetzen der Batterien (10) enthält, wobei das Antriebsgehäuse (12) an der Montageplatte (17) exzentrisch so befestigt ist, daß die exzentrisch an der Stirnseite des Antriebsgehäuses (12) angeordnete Gewindespindel (7) mittig in die Aufnahmekammer (4) des Gehäuseunterteils (2) hineinragt und der Aufnahmeraum für die Batterien (10) seitlich an das Antriebsgehäuse (12) angrenzt, und
**daß** der Einsatz (15) in das Gehäuseunterteil (2) eingesetzt ist und einen zwischen dem Gehäuseunterteil (2) und Gehäuseoberteil (3) einspannbaren Außenbund (18) aufweist.

2. Schmierstoffspender nach Anspruch 1, **dadurch gekennzeichnet, daß** am Gehäuseoberteil (3) ein nach außen geführter Schalter (19) angeordnet ist, der an der Schaltplatine (9) angeschlossen ist und ein Ein- und Ausschalten des Schmierstoffspenders ermöglicht.

3. Schmierstoffspender nach Anspruch 1, **dadurch gekennzeichnet, daß** die Schaltplatine (9 horizontal oberhalb des rückwärtigen Endes des Getriebemotors angeordnet ist, und daß in die Stirnfläche des Gehäuseoberteils (3) ein Druckelement (24) eingesetzt ist, durch dessen Stellbewegung der an der Oberseite der Schaltplatine (9) angeordnete Schalter (19) betätigbar ist.

4. Schmierstoffspender nach Anspruch 3, **dadurch gekennzeichnet, daß** das Druckelement (20) als Drehknopf ausgebildet ist, der bei Betätigung an einer am Gehäuseoberteil (3) angeformten Keilfläche entlanggleitet und zusätzlich zur Drehbewegung auch eine Axialbewegung ausführt.

5. Schmierstoffspender nach Anspruch 3 oder 4, **dadurch gekennzeichnet, daß** auf der Schaltplatine (9) ein Sensorelement angeordnet ist, welches einem an der Rückseite des elektromotorischen Antriebs (12) herausgeführten Wellenstumpf zugeordnet ist und die Stellung der Gewindespindel (7) mittelbar durch Messung der Umdrehungszahl des Wellenstumpfes erfaßt.

6. Schmierstoffspender nach Anspruch 1, **dadurch gekennzeichnet, daß** das Antriebsgehäuse (12) des elektromotorischen Antriebes (6) unter Zwischenschaltung von Distanzelementen auf der Montageplatte (17) befestigt ist und daß an der Oberseite der Montageplatte (17) Sensorelemente im Bereich einer mit der Gewindespindel verbundenen Abtriebswelle (13) angeordnet sind, mit denen die Bewegung oder die Stellung der Gewindespindel (7) mittelbar oder unmittelbar abfragbar sind.

7. Schmierstoffspender nach einem der Ansprüche 1 bis 6, **dadurch gekennzeichnet, daß** die Gewindespindel (7) durch eine Steckkupplung (21) mit einer an der Unterseite der Montageplatte (17) vorstehenden Abtriebswelle (13) des elektromotorischen Antriebs (6) verbunden ist und daß das Gehäuseunterteil (2) mit dem in die Aufnahmekammer (4) eingebrachten Schmierstoffvorrat, dem Stellkolben (8) und der Gewindespindel (7) eine montagefertige und als Einheit wechselbare Baugruppe bildet.

8. Schmierstoffspender nach Anspruch 7, **dadurch gekennzeichnet, daß** die Steckkupplung (21) an einem an der Unterseite der Montageplatte (17) angeordneten Gleitring (22) abgestützt ist, der Axialkräfte aufnimmt und diese in die Montageplatte (17) einleitet.

9. Schmierstoffspender nach Anspruch 8, **dadurch gekennzeichnet, daß** die Gewindespindel (7) an ihrem rückwärtigen Ende einen Mehrkantkopf (23) aufweist, der formschlüssig in die Steckkupplung (21) eingreift und einen Anschlag für die auf der Gewindespindel (7) geführte Spindelmutter (11) des Stellkolbens (8) bildet.

10. Schmierstoffspender nach Anspruch 9, **dadurch gekennzeichnet, daß** in die Spindelmutter (11) ein Elastomerring (24) eingelegt ist, der das Radialspiel zwischen Gewindespindel (7) und Spindelmutter (11) überbrückt und den motorseitigen Raum gegenüber dem Schmierstoffvorratsraum abdichtet.

11. Schmierstoffspender nach einem der Ansprüche 1 bis 10, **dadurch gekennzeichnet, daß** der Stellkolben (8) mindestens eine randseitige Elastomerdichtung (25) aufweist, welche durch ihre Reibung am Gehäuseunterteil (2) den Stellkolben (8) drehfest in der Aufnahmekammer (4) hält.

12. Schmierstoffspender nach einem der Ansprüche 1 bis 11, **dadurch gekennzeichnet, daß** die Schaltplatine (9) einen Speicherbaustein aufweist, in dem Angaben über die Stellung der Gewindespindel (7) bzw. des Stellkolbens (8) abgespeichert werden, und daß der Einsatz (15) eine Schalteinrichtung (26) aufweist, die beim Anschluß eines mit Schmierstoffvorrat gefüllten Gehäuseunterteils (2) mit dem Stellkolben (8) wechselwirkt und eine Reset-Funktion des Speicherbausteins auslöst.

## Claims

1. A lubricant dispenser having
a cylindrical housing (1) which consists of a housing lower part (2) and of a housing upper part (3) which can be screwed on,
an electric motor-operated drive (6) comprising an electric motor, a reducing gear and a threaded spindle (7),
an operating piston (8),
a circuit board (9) in the housing upper part (3) comprising a controller for the electric motor-operated drive (6), and having
batteries (10),
wherein the housing lower part (2) comprises a receiving chamber (4) for a lubricant supply and comprises a machine connection part, which has a lubricant delivery channel (5), on its underside, and wherein the operating piston (8) is fitted into the receiving chamber (4), is attached to a spindle nut (11) which is guided on the threaded spindle (7), and can be moved in the direction of ejection by a rotary movement of the threaded spindle (7), **characterised in that**
the electric motor-operated drive (6) comprises a substantially cylindrical drive housing (12) which contains the electric motor and the reducing gear,
that a replaceable insert (15) is disposed in the housing (1), which insert comprises a cylindrical shell (16) and a basal mounting plate (17) for the drive housing (12) of the electric motor-operated drive (6) and contains a receiving space for the insertion of the batteries (10), wherein the drive housing (12) is fixed eccentrically to the mounting plate (17) so that the threaded spindle (7), which is disposed eccentrically on the end face of the drive housing (12), projects centrally into the receiving chamber (4) of the housing lower part (2), and the receiving space for the batteries (10) adjoins the drive housing (12) laterally, and
that the insert (15) is inserted in the housing lower part (2) and comprises an outer collar (18) which can be clamped between the housing lower part (2) and the housing upper part (3).

2. A lubricant dispenser according to claim 1, **characterised in that** a switch (19) which is led outwards is disposed on the housing upper part (3), which switch is connected to the circuit board (9) and makes it possible to switch the lubricant dispenser on and off.

3. A lubricant dispenser according to claim 1, **characterised in that** the circuit board (9) is disposed horizontally above the back end of the drive motor, and that a pressure element (24) is inserted in the end face of the housing upper part (3), by the actuating movement of which pressure element the switch (19) disposed on the upper face of the circuit board (9) can be operated.

4. A lubricant dispenser according to claim 3, **characterised in that** the pressure element (20) is constructed as a rotary knob, which when operated slides along a wedge face integrally formed on the housing upper part (3) and which also executes an axial movement in addition to its rotary movement.

5. A lubricant dispenser according to claims 3 or 4, **characterised in that** a sensor element is disposed on the circuit board (9), which sensor element is associated with a shaft end which is led out on the back of the electric motor-operated drive (12) and which determines the position of the threaded spindle (7) indirectly by measuring the number of revolutions of the shaft end.

6. A lubricant dispenser according to claim 1, **characterised in that** the drive housing (12) of the electric motor-operated drive (6) is fixed to the mounting plate (17) with spacer elements interposed therebetween, and that sensor elements, with which the movement or the position of the threaded spindle (7) can be interrogated directly or indirectly, are disposed on the upper face of the mounting plate (17) in the region of a driven shaft (13) which is attached to the threaded spindle.

7. A lubricant dispenser according to any one of claims 1 to 6, **characterised in that** the threaded spindle (7) is attached by a plug-in coupling (21) to a driven shaft (13) of the electric motor-operated drive (6), which driven shaft protrudes on the underside of the mounting plate (17), and that the housing lower part (2), with the lubricant supply accommodated in the receiving chamber (4), with the operating piston (8) and with the threaded spindle (7), forms a ready-to-install subassembly which can be replaced as a unit.

8. A lubricant dispenser according to claim 7, **characterised in that** the plug-in coupling (21) is supported on a sliding ring (22), which is disposed on the underside of the mounting plate (17) and which absorbs axial forces and transmits them into the mounting plate (17).

9. A lubricant dispenser according to claim 8, **characterised in that** the threaded spindle (7) has a polygonal head (23) at its back end, which polygonal head fits positively into the plug-in coupling (21) and forms a stop for the spindle nut (11) of the operating piston (8) which is guided on the threaded spindle (7).

10. A lubricant dispenser according to claim 9, **characterised in that** an elastomer ring (24) is inserted in the spindle nut (11), which elastomer ring bridges the radial clearance between the threaded spindle (7) and the spindle nut (11) and seals the space on the motor side from the lubricant supply space.

11. A lubricant dispenser according to any one of claims 1 to 10, **characterised in that** the operating piston (8) has at least one elastomer seal (25) at its edge, which elastomer seal, due to its friction on the housing lower part (2), holds the operating piston (8) rotationally fixed in the receiving chamber (4).

12. A lubricant dispenser according to any one of claims 1 to 11, **characterised in that** the circuit board (9) comprises a memory component in which data on the position of the threaded spindle (7) or of the operating piston (8) are stored, and that the insert (15) comprises a switching device (26) which when connected to a housing lower part (2) filled with a supply of lubricant interacts with the operating piston (8) and triggers a reset function of the memory component.

## Revendications

1. Distributeur de lubrifiant comportant
un boîtier (1) cylindrique, qui est constitué d'une partie inférieure de boîtier (2) et d'une partie supérieure de boîtier (3) vissable,
un dispositif d'entraînement (6) électromotorisé avec moteur électrique, démultiplicateur et broche filetée(7),
un piston de réglage (8),
une platine de commutation (9) dans la partie supérieure de boîtier (3) avec dispositif de commande pour le dispositif d'entraînement (6) électromotorisé ainsi que
des batteries (10)
la partie inférieure de boîtier (2) comportant une chambre de réception (4) pour une réserve de lubrifiant ainsi qu'un élément de raccordement de machine sur la face inférieure avec canal de distribution de lubrifiant (5) et le piston de réglage (8) étant ajusté à l'intérieur de la chambre de réception (4), raccordé à un écrou de broche (11) guidé sur la broche filetée(7) et déplaçable dans le sens d'éjection par un mouvement de rotation de la broche filetée(7), **caractérisé**
**en ce que** le dispositif d'entraînement (6) électromotorisé comporte un boîtier d'entraînement (12) sensiblement cylindrique, qui contient le moteur électrique et le démultiplicateur,
**en ce que** dans le boîtier (1) est disposé un insert (15) interchangeable, qui présente une enveloppe (16) cylindrique ainsi qu'une plaque de montage (17) côté fond pour le boîtier d'entraînement (12) du dispositif d'entraînement (6) électromotorisé et qui contient une chambre de réception pour y insérer les batteries (10), le boîtier d'entraînement (12) étant fixé excentré sur la plaque de montage (17), de manière que la broche filetée(7), disposée excentrée sur le côté frontal du boîtier d'entraînement (12), pénètre au milieu dans la chambre de réception (4) de la partie inférieure de boîtier (2) et de manière que la chambre de réception pour les batteries (10) soit adjacente latéralement au boîtier d'entraînement (12), et
**en ce que** l'insert (15) est inséré dans la partie inférieure de boîtier (2) et comporte un épaulement extérieur (18), à serrer entre la partie inférieure de boîtier (2) et la partie supérieure de boîtier (3).

2. Distributeur de lubrifiant selon la revendication 1, **caractérisé en ce que** sur la partie supérieure de boîtier (3) est disposé un interrupteur (19) guidé vers l'extérieur, qui est raccordé à la platine de commutation (9) et qui permet de mettre en marche et de mettre à l'arrêt le distributeur de lubrifiant.

3. Distributeur de lubrifiant selon la revendication 1, **caractérisé en ce que** la platine de commutation (9) est disposée horizontalement au-dessus de l'extrémité arrière du motoréducteur, et **en ce que** dans la face frontale de la partie supérieure de boîtier (3) est inséré un élément de pression (24), dont le mouvement de réglage permet d'actionner l'interrupteur (19) disposé sur la face supérieure de la platine de commutation (9).

4. Distributeur de lubrifiant selon la revendication 3, **caractérisé en ce que** l'élément de pression (20) est conformé en bouton tournant, qui lorsqu'il est actionné glisse le long d'une surface en coin, formée sur la partie supérieure de boîtier (3), et exécute aussi un mouvement axial en plus du mouvement tournant.

5. Distributeur de lubrifiant selon la revendication 3 ou 4, **caractérisé en ce que** sur la platine de commutation (9) est disposé un élément détecteur, qui est associé à un bout d'arbre, ressortant de la face arrière du dispositif d'entraînement (12) électromotorisé et qui enregistre la position de la broche filetée(7) indirectement, par mesure de la vitesse de rotation du bout d'arbre.

6. Distributeur de lubrifiant selon la revendication 1, **caractérisé en ce que** le boîtier d'entraînement (12) du dispositif d'entraînement (6) électromotorisé est fixé sur la plaque de montage (17), par l'intermédiaire d'éléments d'écartement, et **en ce que** sur la face supérieure de la plaque de montage (17) sont disposés des éléments détecteurs, dans la région d'un arbre mené (13), relié à la broche filetée, au moyen desquels peut être interrogé, directement ou indirectement le mouvement ou la position de la broche filetée (7).

7. Distributeur de lubrifiant selon l'une des revendications 1 à 6, **caractérisé en ce que** la broche filetée (7) est reliée, par un accouplement à enfichage (21), avec un arbre mené (13), dépassant de la face inférieure de la plaque de montage (17), du dispositif d'entraînement (6) électromotorisé et **en ce que** la partie inférieure de boîtier (2) forme un ensemble prêt au montage et interchangeable en tant qu'unité, avec la réserve de lubrifiant introduite dans la chambre de réception (4), avec le piston de réglage (8) et la broche filetée (7).

8. Distributeur de lubrifiant selon la revendication 7, **caractérisé en ce que** l'accouplement à enfichage (21) prend appui contre un anneau glissant (22), disposé sur la face inférieure de la plaque de montage (17), lequel anneau glissant absorbe les forces axiales et les introduit dans la plaque de montage (17).

9. Distributeur de lubrifiant selon la revendication 8, **caractérisé en ce que** la broche filetée (7) présente, à son extrémité arrière, une tête polygonale (23) qui s'engage par concordance de forme dans l'accouplement à enfichage (21) et qui forme une butée pour l'écrou de broche (11) du piston de réglage (8), guidé sur la broche filetée (7).

10. Distributeur de lubrifiant selon la revendication 9, **caractérisé en ce que** dans l'écrou de broche (11) est placée une bague élastomère (24), qui compense le jeu radial entre la broche filetée (7) et l'écrou de broche (11) et qui rend étanche le volume côté moteur par rapport à la chambre de réserve de lubrifiant.

11. Distributeur de lubrifiant selon l'une des revendications 1 à 10, **caractérisé en ce que** le piston de réglage (8) présente au moins une étanchéité élastomère (25) sur les bords, qui par sa friction sur la partie inférieure de boîtier (2), maintient le piston de réglage (8) fixe en rotation dans la chambre de réception (4).

12. Distributeur de lubrifiant selon l'une des revendications 1 à 11, **caractérisé en ce que** la platine de commutation (9) comporte un composant de mémoire, dans lequel sont mémorisées des indications concernant la position de la broche filetée (7) ou du piston de réglage (8), et **en ce que** l'insert (15) comporte un dispositif de commutation (26), qui en cas de raccordement d'une partie inférieure de boîtier (2) remplie d'une réserve de lubrifiant, interagit avec le piston de réglage (8) et déclenche une fonction de remise à zéro du composant à mémoire.
